# EUROPÄISCHE PATENTANMELDUNG

(11) **EP 4 651 325 A1**
(43) Veröffentlichungstag der Anmeldung: **19.11.2025**
(21) Anmeldenummer: 25173119.6
(22) Anmeldetag: 29.04.2025
(51) Int. Cl.: H02G 3/12

(54) **HOHLWANDDOSE MIT SCHNELLBEFESTIGUNGSSYSTEM**

(30) Priorität: 17.05.2024 DE 102024113907
(71) Anmelder: Wintersteiger, Thomas, 84544 Aschau am Inn (DE)
(72) Erfinder: Wintersteiger, Thomas, 84544 Aschau am Inn (DE)
(74) Vertreter: Grünecker Patent- und Rechtsanwälte PartG mbB

(57) **Zusammenfassung**

Die vorliegende Erfindung betrifft eine Hohlwanddose (1) für Elektroinstallationen in einer Hohlwand, wobei die Hohlwanddose (1) einen Dosenkörper (2) aufweist, der einen über eine Installationsöffnung (3) zugänglichen Installationsraum (4) bildet, wobei die Hohlwanddose (1) eine Verankerungseinrichtung (5) mit wenigstens einem verstellbaren Verankerungselement (5b) aufweist, um die Hohlwanddose (1) im eingesetzten Zustand in der Hohlwand zu verankern. Um die Hohlwanddose (1) besonders einfach und schnell in der Hohlwand montieren zu können ist erfindungsgemäß vorgesehen, dass die Verankerungseinrichtung (5) zwischen einer Einsetzstellung, in welcher die Hohlwanddose (1) zum Einsetzen in die Hohlwand eine minimierte Einsetzkontur aufweist, und einer Verankerungsstellung, in welcher das wenigstens eine Verankerungselement (5b) über die Einsetzkontur der Hohlwanddose (1) vorsteht, überführbar ist.

## Beschreibung

Die vorliegende Erfindung betrifft eine Hohlwanddose mit einem Schnellbefestigungssystem, das eine schnelle Montage der Hohlwanddose ermöglicht. Als Hohlwanddose wird eine Dose für Elektroinstallationen in einer Hohlwand bezeichnet. Eine solche Hohlwanddose weist i.d.R. einen Dosenkörper auf, der einen über eine Installationsöffnung zugänglichen Installationsraum umgibt. In diesem Installationsraum können Elektroinstallationen wie Steckdosen, Lichtschalter oder dergleichen innerhalb der Hohlwand untergebracht werden.

Im Gegensatz zu einer Massivbauwand steht bei einer Hohlwand nur eine geringe Wandstärke zur Befestigung der Installationsdose zur Verfügung. Zur lagesicheren Positionierung und Montage der Installationsdose in der Hohlwand ist daher i.d.R. eine Verankerungseinrichtung notwendig, die ggf. mit eigenem Werkzeug (z.B. Schraubendreher) umständlich zu bedienen ist.

Der Erfindung liegt die Aufgabe zugrunde, eine Hohlwanddose bereitzustellen, die besonders einfach und schnell, insbesondere werkzeugfrei, in der Hohlwand verankert werden kann.

Zur Lösung dieser Aufgabe stellt die vorliegende Erfindung die Hohlwanddose nach Anspruch 1 bereit.

Offenbart ist eine Hohlwanddose für Elektroinstallationen in einer Hohlwand, wobei die Hohlwanddose einen Dosenkörper aufweist, der einen über eine Installationsöffnung zugänglichen Installationsraum bildet, wobei die Hohlwanddose eine Verankerungseinrichtung mit wenigstens einem verstellbaren Verankerungselement aufweist, um die Hohlwanddose im eingesetzten Zustand in der Hohlwand zu verankern, wobei die Verankerungseinrichtung vorzugsweise werkzeugfrei zwischen einer Einsetzstellung, in welcher die Hohlwanddose zum Einsetzen in die Hohlwand eine minimierte Einsetzkontur aufweist, und einer Verankerungsstellung, in welcher das wenigstens eine Verankerungselement über die Einsetzkontur der Hohlwanddose vorsteht, überführbar ist. Mit dieser Hohlwanddose ist eine einfache und schnelle, insbesondere werkzeugfreie, Verankerung in der Hohlwand möglich. Zur Montage muss die Hohlwanddose lediglich in die dafür vorgesehene Hohlwandöffnung eingesetzt werden und die Verankerungseinrichtung aus der Einsetzstellung in die Verankerungsstellung überführt werden.

Vorteilhafte Weiterbildungen sind Gegenstand der abhängigen Ansprüche.

Es kann sinnvoll sein, wenn die Hohlwanddose wenigstens ein Betätigungselement aufweist, um die Verankerungseinrichtung, vorzugsweise stufenlos, zwischen der Einsetzstellung und der Verankerungsstellung zu überführen, wobei die Hohlwanddose bevorzugt für jedes Verankerungselement ein eigenes Betätigungselement aufweist. Dadurch kann die Hohlwanddose je nach örtlichen Gegebenheiten optimal in der Hohlwand verankert werden.

Es kann sich als nützlich erweisen, wenn das Betätigungselement bewegbar am Dosenkörper gelagert ist, vorzugsweise in einer zur Achse des Dosenkörpers parallelen Richtung bewegbar. Diese Ausführungsform erleichtert die Betätigung des Betätigungselements, da diese in einem Zug bzw. in einem kontinuierlichen Bewegungsablauf in derselben Bewegungsrichtung mit dem Einsetzen der Hohlwanddose in eine Hohlwandöffnung ausgeführt werden kann.

Es kann hilfreich sein, wenn das Betätigungselement unverlierbar mit dem Dosenkörper verbunden ist. Dadurch kann vermieden werden, dass das Betätigungselement beim Transport oder bei der Lagerung verloren geht.

Es kann sich als zweckdienlich erweisen, wenn die Hohlwanddose, vorzugsweise für jedes Betätigungselement, einen Führungskanal aufweist, in welchem das Betätigungselement bewegbar angeordnet ist, wobei das Betätigungselement bevorzugt in der Ausgangsstellung aus dem Führungskanal vorsteht und/oder in der Verankerungsstellung teilweise oder vollständig innerhalb des Führungskanals liegt. Der Führungskanal gibt die bestimmungsgemäße Bewegungsrichtung des Betätigungselements durch seinen Verlauf bereits vor. Die Betätigung des Betätigungselements in der vorgesehenen Richtung ist dadurch auch für ungeübtes Personal einfach und intuitiv ausführbar. Dadurch werden Bedienfehler minimiert.

Es kann praktisch sein, wenn das Betätigungselement das Verankerungselement zur Überführung von der Ausgangsstellung in die Verankerungsstellung in radialer Richtung nach außen verdrängt, vorzugsweise durch Verschwenken des Verankerungselements um eine Schwenkachse, bevorzugt um eine radial außerhalb des Betätigungselements liegende Schwenkachse, besonders bevorzugt derart, dass das Verankerungselement mit zunehmender Verschwenkung um die Schwenkachse sich entgegen der Einsetzrichtung zur Ebene der Installationsöffnung hindreht. Im verschwenkten Zustand bzw. in der Verankerungsstellung bildet das Verankerungselement einen die Installationswand hintergreifenden Hinterschnitt, der verhindert, dass die Hohlwanddose aus der Hohlwandöffnung herausgezogen werden kann. Durch die Zusammenwirkung des Verankerungselements mit dem Betätigungselement kann die Schwenkposition des Verankerungselements genau bestimmt werden, sodass sich das Verankerungselement sicher an z.B. an Trockenbauwänden mit unterschiedlichen Wandstärken einfach und sicher verankern kann.

Es kann sich als vorteilhaft erweisen, wenn das Verankerungselement mit zunehmender Betätigung des Betätigungselements zunehmend von einer eingefahrenen Position in der Ausgangsstellung der Verankerungseinrichtung in eine maximal ausgefahrene Position in der Verankerungsstellung der Verankerungseinrichtung überführt wird, wobei vorzugsweise das Betätigungselement und das Verankerungselement über einen Keileingriff zusammenwirken. Bei dieser Ausführung ist die Verschwenkbarkeit des Verankerungselements besonders gut kontrollierbar. Durch den Keileingriff zwischen dem Verankerungselement und dem Betätigungselement erhält ein Benutzer eine direkte mechanische Rückmeldung, falls das Verankerungselement bestimmungsgemäß in Anlage an der Innenseite der Installationswand gelangt. Dadurch kann der Eingriff zwischen dem Verankerungselement und der Installationswand präzise eingestellt werden. Auch dieses Merkmal verbessert die Montagefreundlichkeit der Hohlwanddose.

Es kann sinnvoll sein, wenn das Betätigungselement in der Ausgangsstellung und/oder in der Verankerungsstellung und/oder in wenigstens einer Zwischenstellung der Hohlwanddose kraft- und/oder formschlüssig am Dosenkörper arretiert oder arretierbar ist. Dadurch kann verhindert werden, dass die Verankerungseinrichtung unbeabsichtigt aus der jeweilige Stellung überführt wird.

Es kann von Nutzen sein, wenn ein Betätigungsabschnitt des Betätigungselements in der Verankerungsstellung in der Ebene der Installationsöffnung liegt und/oder bündig mit einem die Installationsöffnung definierenden Rand des Dosenkörpers ausgerichtet ist. Dadurch stellt das Betätigungselement in der Verankerungsstellung kein Hindernis dar, welches die bestimmungsgemäße Benutzung der Hohlwanddose beeinträchtigt. Das Betätigungselement kann vorzugsweise in der Verankerungsstellung durch Aufnahme und Befestigung einer Elektroinstallation in der Hohlwanddose zusätzlich gesichert werden. Sobald eine Elektroinstallation in der Hohlwanddose aufgenommen und befestigt ist, lässt sich das Betätigungselement - und folglich auch das Verankerungselement - nicht mehr bewegen. Demnach ist die Verankerungseinrichtung in der Verankerungsstellung gesichert.

Es kann sich als vorteilhaft herausstellen, wenn das Verankerungselement fest mit dem Dosenkörper verbunden ist, vorzugsweise kraft-und/oder formschlüssig, wobei das Verankerungselement bevorzugt einstückig am Dosenkörper angeformt ist. Dadurch lässt sich die Anzahl der Einzelteile der Hohlwanddose verringert. Zudem kann die Handhabung der Hohlwanddose vereinfacht werden.

Es kann hilfreich sein, wenn das Verankerungselement zur Überführung der Verankerungseinrichtung zwischen der Ausgangsstellung und der Verankerungsstellung verformbar ist, vorzugsweise elastisch oder plastisch, bevorzugt gelenkig, insbesondere über ein Festkörpergelenk, wobei eine Gelenkachse des Festkörpergelenks besonders bevorzugt tangential zum Dosenkörper ausgerichtet ist. Diese Ausführung erweist sich als besonders vorteilhaft, weil das Verankerungselement und dessen Funktionalität bzw. dessen Bewegungsfreiheitsgrade mit einfachsten Mitteln hergestellt werden können. Fehlbedienungen der Verankerungseinrichtung sind dadurch nahezu ausgeschlossen.

Es kann von Vorteil sein, wenn das Verankerungselement streifenförmig ausgebildet ist und/oder in Einsetzrichtung der Hohlwanddose vorsteht. Bei dieser Bauform ist die Hohlwanddose besonders einfach aufgebaut und leicht bedienbar.

Es kann von Nutzen sein, wenn das Verankerungselement in der Ausgangsstellung im Wesentlichen bündig mit einer Wand, vorzugsweise einer Außenwand, des Dosenkörpers verläuft. Dadurch weist die Hohlwanddose eine besonders kompakte Einsetzkontur auf.

Es kann sich als praktisch erweisen, wenn der Dosenkörper zumindest abschnittsweise doppelwandig ausgebildet ist, wobei eine Innenwand des Dosenkörpers den Installationsraum bildet, wobei eine Außenwand des Dosenkörpers die Außenkontur der Hohlwanddose bildet, wobei das Betätigungselement vorzugsweise zumindest abschnittsweise oder vollständig zwischen der Innenwand und der Außenwand des Dosenkörpers angeordnet ist, wobei das Betätigungselement bevorzugt nicht in radialer Richtung über die Außenwand des Dosenkörpers vorsteht. Bei dieser Bauform wird die bestimmungsgemäße Benutzung der Hohlwanddose nicht durch das Betätigungselement beeinträchtigt, weil das Betätigungselement weder nach innen zum Installationsraum, noch nach außen über die Einsetzkontur vorsteht.

Es kann praktisch sein, wenn die Verankerungseinrichtung eine Mehrzahl von Verankerungselementen aufweist, die, vorzugsweise einzeln, zwischen der Ausgangsstellung und der Verankerungsstellung überführbar sind. Bei dieser Bauform wird die Auszugsicherung der Verankerungseinrichtung erhöht.

Es kann nützlich sein, wenn die Verankerungselemente symmetrisch am Dosenkörper angeordnet sind, vorzugsweise auf diametral gegenüberliegenden Seiten des Dosenkörpers, bevorzugt um 90° drehversetzt zu wenigstens einem Trennwandabschnitt, der zur Verbindung der Installationsöffnungen und/oder Installationsräume gekoppelter Hohlwanddosen aus dem Dosenkörper heraustrennbar ist. Diese Ausführung ermöglicht eine gleichmäßige Lastverteilung um den Umfang des Dosenkörpers.

Es kann hilfreich sein, wenn das Verankerungselement hebelförmig ausgebildet ist, um eine darauf einwirkende Kraft hebelartig auf eine Installationswand zu übersetzen oder untersetzen.

Weitere vorteilhafte Weiterbildungen ergeben sich durch Kombinationen der in den Ansprüchen, den Figuren und der Beschreibung offenbarten Merkmal.

### Begriffe und Definitionen

Der Begriff Verankerungseinrichtung betrifft eine Einrichtung, mit welcher die Hohlwanddose kraftschlüssig und/oder formschlüssig in der Hohlwand festgelegt werden kann.

### Kurze Beschreibung der Figuren

Es zeigen:
Fig. 1 eine perspektivische Ansicht einer erfindungsgemäßen Hohlwanddose nach dem ersten Ausführungsbeispiel in der Einsetzstellung, in welcher sich Verankerungselemente der Verankerungseinrichtung in einem eingefahrenen Zustand befinden.
Fig. 2 eine perspektivische Ansicht der Hohlwanddose aus Fig. 1 in der Verankerungsstellung, in welcher sich Verankerungselemente der Verankerungseinrichtung in einem ausgefahrenen Zustand befinden.
Fig. 3 eine Schnittansicht der Hohlwanddose aus Fig. 1 in der Einsetzstellung, wobei der Schnitt entlang der Dosenachse und durch die Verankerungselemente verläuft.
Fig. 4 eine Schnittansicht der Hohlwanddose aus Fig. 2 in der Verankerungsstellung, wobei der Schnitt entlang der Dosenachse und durch die Verankerungselemente verläuft.
Fig. 5 eine perspektivische Ansicht einer erfindungsgemäßen Hohlwanddose nach dem zweiten Ausführungsbeispiel in der Einsetzstellung, in welcher sich Verankerungselemente der Verankerungseinrichtung in einem eingefahrenen Zustand befinden.
Fig. 6 eine perspektivische Ansicht der Hohlwanddose aus Fig. 5 in der Verankerungsstellung, in welcher sich Verankerungselemente der Verankerungseinrichtung in einem ausgefahrenen Zustand befinden.
Fig. 7 eine Schnittansicht der Hohlwanddose aus Fig. 5 in der Einsetzstellung, wobei der Schnitt entlang der Dosenachse und durch die Verankerungselemente verläuft.
Fig. 8 eine Schnittansicht der Hohlwanddose aus Fig. 6 in der Verankerungsstellung, wobei der Schnitt entlang der Dosenachse und durch die Verankerungselemente verläuft.

### Detaillierte Beschreibung der bevorzugten Ausführungsbeispiele

Bevor verschiedene Varianten von Verankerungseinrichtungen 5 mit Bezug auf die Ausführungsbeispiele im Detail beschrieben werden, werden nachstehend gemeinsame Merkmale dieser Ausführungsbeispiele erläutert:
Die hierin beschriebene Hohlwanddose 1 dient zur Aufnahme von Elektroinstallationen wie Lichtschaltern, Steckdosen oder Sensoren in einer Hohlwand. Die Hohlwanddose 1 weist einen Dosenkörper 2 auf, der einen über eine Installationsöffnung 3 zugänglichen Installationsraum 4 bildet. Der Dosenkörper 2 offenbart einen die Installationsöffnung 3 definierenden Rand 2a, mit welchem sich die Hohlwanddose 1 an die Außenseite bzw. Sichtseite einer Installationswand der Hohlwand anlegen kann. Ausgehend von diesem Rand 2a erstreckt sich die Dosenwand 2b umlaufend bis hin zum Dosenboden 2c. Die Dosenwand 2b umfasst außenseitig an diametral gegenüberliegenden Seiten integrierte Kopplungsabschnitte, über welche identische Hohlwanddosen 1 z.B. mechanisch/formschlüssig miteinander koppelbar sind. Die Dosenwand 2b umfasst zudem auch heraustrennbare Wandabschnitte 2d, die innerhalb dieser Kopplungsabschnitte liegen und von der Dosenwand 2b abtrennbar sind, sodass die Installationsöffnungen 3 und/oder Installationsräume 4 der gekoppelten Hohlwanddosen 1 miteinander kommunizieren können. Innenseitig an den heraustrennbaren Wandabschnitten 2d sowie um je 90° versetzt dazu an der Innenseite der Dosenwand 2b befinden sich Befestigungsabschnitte (z.B. Schraubdome in dreifacher Anordnung) zur Aufnahme von Befestigungsmitteln, um z.B. eine Elektroinstallation am Dosenkörper 2 zu befestigen. Beispielsweise am Übergang zwischen Dosenwand 2b und Dosenboden 2c können diverse Draht-, Kabel- oder Rohreinführungsabschnitte vorgesehen sein, um eine im Installationsraum 4 angeordnete Elektroinstallation unter Durchdringung der Dosenwand mit Kabeln, Leitern oder dergleichen zu verbinden.

Erfindungsgemäß weist die Hohlwanddose 1 eine Verankerungseinrichtung 5 mit wenigstens einem verstellbaren Verankerungselement 5b auf, um die Hohlwanddose 1 im eingesetzten Zustand in der Hohlwand zu verankern, wobei die Verankerungseinrichtung 5 zwischen einer Einsetzstellung, in welcher die Hohlwanddose 1 zum Einsetzen in die Hohlwand eine minimierte Einsetzkontur aufweist, und einer Verankerungsstellung, in welcher das wenigstens eine Verankerungselement 5b über die Einsetzkontur der Hohlwanddose 1 vorsteht, überführbar ist.

Die Einsetzkontur wird dabei im Wesentlichen durch den Außendurchmesser des Dosenkörpers 2 bestimmt. Die Einsetzkontur ist näherungsweise zylindrisch, wobei sich beispielsweise die Außenkontur des Dosenkörpers 2 ausgehend vom Rand 2a zum Dosenboden 2c sich leicht konisch verjüngt, um das Einsetzen der Dose in die Hohlwandöffnung zu erleichtern.

Die Verankerungseinrichtung 5 wird in den vorliegenden Ausführungsbeispielen im Wesentlichen durch zwei einstückig über Festkörpergelenke 5c mit der Dosenwand 2d verbundene Verankerungselemente 5b gebildet, die auf diametral gegenüberliegenden Außenseiten der Dosenwand 2d angeordnet sich und durch einzeln betätigbare Betätigungselemente 5a von der Einsetzstellung in die Verankerungsstellung überführbar sind. Bei diesen Betätigungselementen 5a handelt es sich um stiftförmige Elemente, die in der Dosenwand 2b bzw. darin ausgebildeten Kanälen gleitend und parallel zur Dosenachse verschieblich geführt sind. Die Betätigungselemente 5a wirken mit den gelenkig an die Dosenwand 2b angeformten und symmetrisch am Dosenkörper 2 angeordneten Verankerungselementen 5b derart zusammen, dass die Verankerungselemente 5b beim Bewegen der Betätigungselemente 5a entlang der Dosenachse A relativ zum Dosenkörper 2 in radialer Richtung verdrängt werden, um über die - imaginär zylindrische - Außenkontur des Dosenkörpers 2 in radialer Richtung vorzustehen. Die Verankerungselemente 5b befinden sich vorzugsweise auf diametral gegenüberliegenden Seiten des Dosenkörpers 2, bevorzugt um je 90° drehversetzt zu den Trennwandabschnitten 2d, die zur Verbindung der Installationsöffnungen 3 und/oder Installationsräume 4 gekoppelter Hohlwanddosen 1 aus dem Dosenkörper 2 heraustrennbar sind.

Nachstehend werden die besonderen Merkmale bevorzugten Ausführungsbeispiele mit Bezug auf die Figuren im Detail beschrieben.

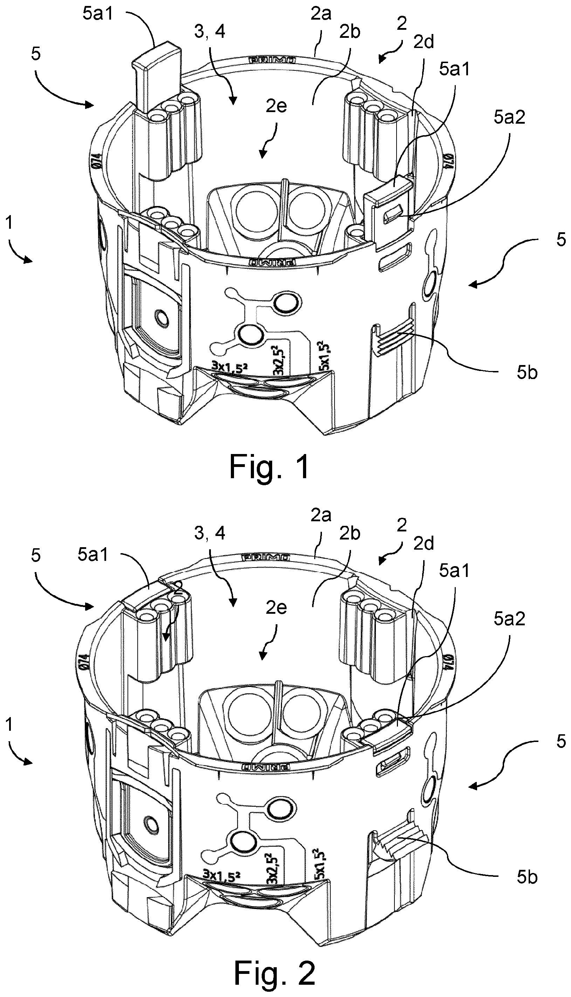

### Erstes Ausführungsbeispiel (Fig. 1-4)

Im ersten Ausführungsbeispiel, welches nachstehend mit Bezug auf die Fig. 1-4 beschrieben wird, umfasst die Verankerungseinrichtung 5 zwei Verankerungselemente 5b, die auf diametral gegenüberliegenden Seiten an der Außenwand des Dosenkörpers 2 über Festkörpergelenke gelenkig angebunden sind. Die Verankerungselemente 5b sind durch zwei vorzugsweise parallel zur Dosenachse A verlaufende Schlitze aus der Außenwand des Dosenkörpers 2 quasi "freigeschnitten" und um eine die Enden der Schlitze verbindende, tangential zum Dosenkörper 2 ausgerichtete Schwenkachse gelenkig verformbar. Jedes Verankerungselement 5b ist zur Überführung der Verankerungseinrichtung 5 zwischen der Einsetzstellung und der Verankerungsstellung über ein Festkörpergelenk 5e, dessen Gelenkachse der Schwenkachse entspricht, einzeln gelenkig verformbar. Am distalen bzw. freien Ende weist das Verankerungselement 5b rippenförmige Halteabschnitte auf, die bestimmungsgemäß in Kontakt mit der Installationsöffnung einer Installationswand gelangen, um die Hohlwanddose 1 dort zu verankern.

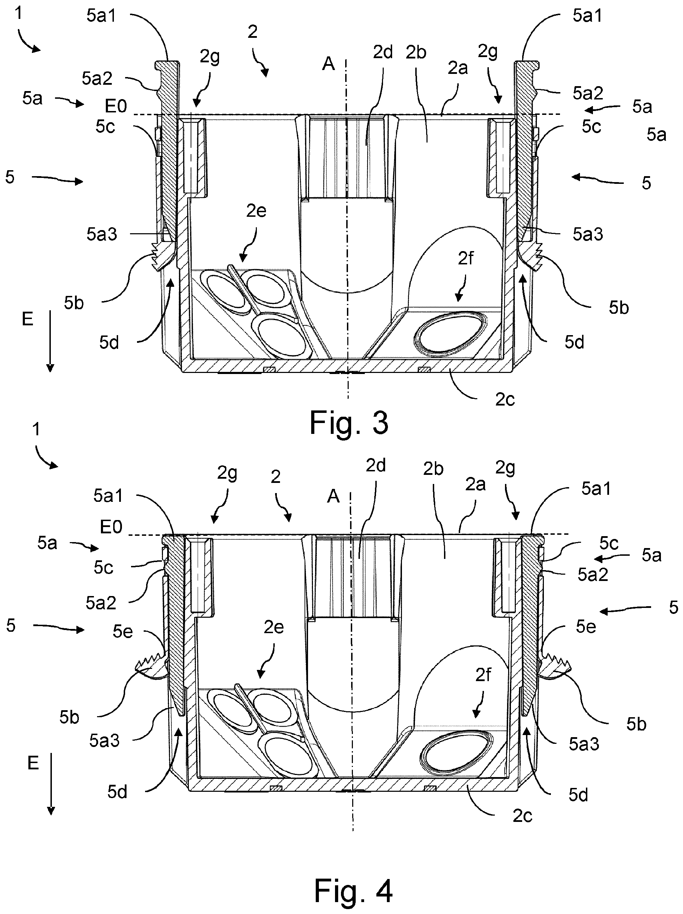

In der in Fig. 1 und 3 dargestellten Einsetzstellung weist die Hohlwanddose 1 zum Einsetzen in die Hohlwand 1 eine minimierte Einsetzkontur auf. Dabei erstrecken sich die beiden laschenförmigen Verankerungselemente 5b bündig zu den angrenzenden Abschnitten der Dosenwand 2b. Die Einsetzkontur entspricht demnach näherungsweise der quasi zylindrischen, sich ggf. vom Dosenrand 2a zum Dosenboden 2c leicht verjüngenden Außenkontur des Dosenkörpers 2.

In der in den Fig. 2 und 4 dargestellten Verankerungsstellung stehen die Verankerungselemente 5b in radialer Richtung über die Einsetzkontur der Hohlwanddose 1 hervor.

Zur stufenlosen Überführung der Verankerungseinrichtung 5 zwischen der Einsetzstellung und der Verankerungsstellung umfasst die Hohlwanddose 1 für jedes Verankerungselement 5b ein eigenes Betätigungselement 5a, das in einem im Dosenkörper 2 ausgebildeten Führungskanal 5d unverlierbar gehalten und in einer zur Achse des Dosenkörpers 2 parallelen Richtung bewegbar am Dosenkörper 2 gelagert ist. In der Einsetzstellung (Fig. 1 und 3) steht das Betätigungselement 5a aus dem Führungskanal 5d vor. In der Verankerungsstellung liegt das Betätigungselement 5a vollständig innerhalb des Führungskanals 5d. Ein als Druckknopf ausgebildeter Betätigungsabschnitt 5a1 des Betätigungselements 5a liegt in der Verankerungsstellung in der Ebene E0 der Installationsöffnung und ist bündig mit dem die Installationsöffnung 3 definierenden Rand 2a des Dosenkörpers 2 ausgerichtet.

Zur Überführung von der Einsetzstellung in die Verankerungsstellung verdrängt das Betätigungselement 5a das Verankerungselement 5b über einen Keileingriff in radialer Richtung nach außen. Dabei wird das Verankerungselement 5b über die Schwenkachse 5e nach außen verdrängt, sodass das Verankerungselement 5b mit zunehmender Verschwenkung um die Schwenkachse 5e sich entgegen der Einsetzrichtung E zur Ebene E0 der Installationsöffnung hindreht. Mit zunehmender Betätigung des Betätigungselements 5a wird das Verankerungselement 5b zunehmend von einer Einsetzstellung, in welcher das Verankerungselement 5b bündig mit der Dosenwand 2a ausgerichtet ist, in eine maximal ausgefahrene Position in der Verankerungsstellung, in welcher das freie Ende des Verankerungselements 5b über die Dosenwand 2b vorsteht, überführt.

Um ein unbeabsichtigtes Überführen der Verankerungseinrichtung 5 zwischen der Einsetzstellung und der Verankerungsstellung zu vermeiden ist das Betätigungselement 5a in der Ausgangsstellung und/oder in der Verankerungsstellung und/oder in wenigstens einer Zwischenstellung der Hohlwanddose 1 kraft- und/oder formschlüssig am Dosenkörper 2 arretiert oder arretierbar.

Das Verankerungselement 5b ist streifenförmig ausgebildet und steht in Einsetzrichtung E der Hohlwanddose 1 vor.

Das Verankerungselement 5b verläuft in der Ausgangsstellung im Wesentlichen bündig mit einer Wand, vorzugsweise einer Außenwand, des Dosenkörpers 2.

Zur Ausbildung des Führungskanals 5d ist der Dosenkörper 2 abschnittsweise doppelwandig ausgebildet. Eine Innenwand des Dosenkörpers 2 bildet den Installationsraum 4, wobei eine Außenwand des Dosenkörpers 2 die Außenkontur der Hohlwanddose 1 bildet. Das Betätigungselement 5a ist abschnittsweise oder vollständig zwischen der Innenwand und der Außenwand des Dosenkörpers 2 angeordnet, ohne in radialer Richtung über die Außenwand des Dosenkörpers 2 vorzustehen.

Durch Lösen und ggf. Entfernen der Betätigungselemente 5a kann die Hohlwanddose 1 wieder aus der Wand genommen werden.

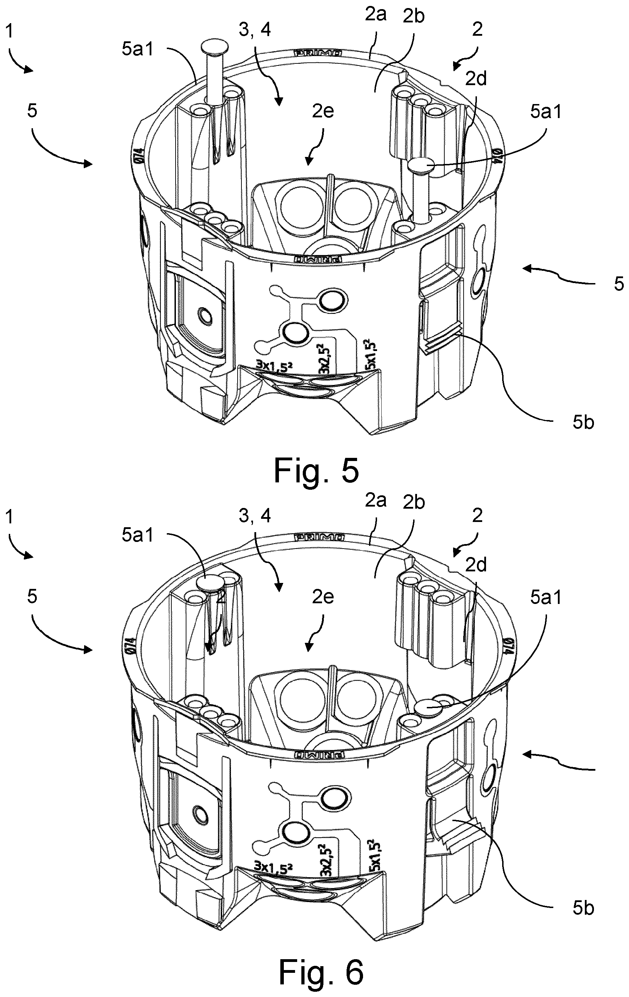

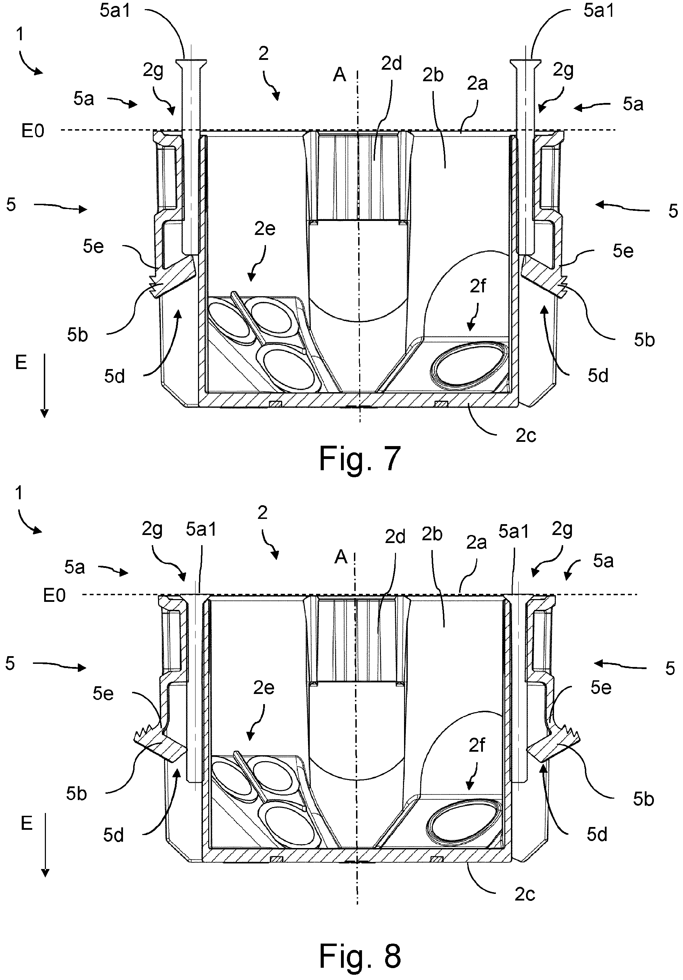

### Zweites Ausführungsbeispiel (Fig. 5-8)

Das zweite Ausführungsbeispiel basiert auf dem ersten Ausführungsbeispiel und weist mit Ausnahme der nachstehend erläuterten Unterschiede identische Merkmal auf, die mit identischen Bezugszeichen versehen sind.

Abweichend vom ersten Ausführungsbeispiel sind im zweiten Ausführungsbeispiel vor allem die Betätigungselemente 5a und Verankerungselemente 5b leicht anders konstruiert. Bei den Betätigungselementen 5a handelt es sich um Befestigungsschrauben, z.B. mit denen Elektroinstallationen wie Steckdosen, Lichtschalter oder dgl. an der Hohlwanddose 1 festgeschraubt werden können. Beim Festschrauben der Elektroinstallationen an der Hohlwanddose 1 mit den Befestigungsschrauben 5a wird zugleich die Verankerungseinrichtung 5 betätigt. Dabei umfasst das Verankerungselement 5b einen über ein Festkörpergelenk 5d gelenkig an die Dosenwand 2b gekoppelten, einstückig angeformten Vorsprung bzw. Auslenkabschnitt 5f, dessen freies Ende nach innen in den Führungskanal 5d ragt und in der Einsetzstellung in etwa zum Mittelpunkt der Installationsöffnung 3 in der Ebene E0 zeigt. Dieses freie Ende des Vorsprungs 5f ist bestimmungsgemäß dazu vorgesehen, mit dem im Führungskanal 5d parallel zur Dosenachse A verstellbar gelagerten Betätigungselement 5a in Kontakt zu gelangen und dadurch ausgelenkt zu werden. Beim Auslenken des Verankerungselements 5b schwenkt der Vorsprung 5f um die tangential zur Dosenachse ausgerichtete Schwenkachse nach außen, sodass das hintere Ende bzw. der Absatz des Verankerungselements 5b, der im Vergleich zum Vorsprung 5f auf der anderen Seite (Außenseite) der Schwenkachse liegt, zunehmend in radialer Richtung über die Einsetzkontur des Dosenkörpers 2 vorsteht und mit den rippenförmigen Eingriffsabschnitten sich zunehmend zur Ebene E0 dreht bzw. weist. Durch das Verschwenken des Verankerungselements 5b um das Festkörpergelenk 5e vergrößert sich der Spalt des Vorsprungs 5f von der den Installationsraum 4 definierenden Innenwand der Dose 2, sodass das Betätigungselement 5a bei weiterer Bewegung in Einsetzrichtung parallel zur Dosenachse A durch diesen Spalt hindurchpasst und somit ein elastisches Rückstellen des ausgelenkten Verankerungselements 5b blockiert. Das Verankerungselement 5b kann ohne Entfernen des Betätigungselements 5a aus dem Führungskanal 5d folglich nicht mehr in die Einsetzstellung überführt werden.

Im Vergleich zum ersten Ausführungsbeispiel ist das Verankerungselement 5b im zweiten Ausführungsbeispiel als Hebel konstruiert, welcher die auslenkende Kraft des Betätigungselements mit einem Hebelverhältnis > 1 zwischen Kraftarm und Lastarm übersetzt, wenn eine große Klemmkraft erwünscht ist, oder mit einem Hebelverhältnis < 1 zwischen Kraftarm und Lastarm untersetzt, wenn ein großer Hub erwünscht ist (Lastarm: Hebelarm auf der Seite der zu bewegenden Last, Kraftarm: Hebelarm auf der Seite der bewegenden Kraft; "Kraft mal Kraftarm ist gleich Last mal Lastarm").
Im vollständig eingebrachten bzw. eingeschraubten Zustand des Betätigungselements 5a bzw. in der Verankerungsstellung liegt der als Betätigungsabschnitt 5a1 dienende Schraubenkopf jeder Befestigungsschraube bündig mit dem oberen Rand 2a in der Ebene E0 der Installationsöffnung. In der Einsetzstellung steht dieser als Betätigungsabschnitt 5a1 dienende Schraubenkopf weit über die Ebene E0 hervor und ist zum Ansetzen eines Schraubendrehers gut erreichbar. Jede als Betätigungselement 5a dienende Befestigungsschraube wird beim Befestigen der Elektroinstallation an der Installationsdose 1 in die Befestigungsabschnitte 2g eingeschraubt und die Verankerungselemente 5b werden damit in der Verankerungsstellung gesichert. Durch Lösen und ggf. Entfernen der Befestigungsschrauben 5a kann die Hohlwanddose 1 wieder aus der Wand entnommen werden.

### Bezugszeichenliste

- 1: Hohlwanddose
- 2: Dosenkörper
- 2a: Dosenrand
- 2b: Dosenwand
- 2c: Dosenboden
- 2d: Trennabschnitt
- 2e: Kabeleinführungsabschnitt
- 2f: Rohreinführungsabschnitt
- 2g: Befestigungsdome
- 3: Installationsöffnung
- 4: Installationsraum
- 5: Verankerungseinrichtung
- 5a: Betätigungselement
- 5a1: Betätigungsabschnitt
- 5a2: Arretierabschnitt (Rastnase)
- 5a3: Auslenkabschnitt (Keilfläche)
- 5b: Verankerungsabschnitt
- 5c: Rastnut
- 5d: Führungskanal (für Betätigungselement)
- 5e: Festkörpergelenk (zwischen Dosenwand und Verankerungsabschnitt)
- 5f: Vorsprung bzw. Auslenkabschnitt
- A: Achse des Dosenkörpers
- E: Einsetzrichtung
- E0: Ebene der Installationsöffnung

## Patentansprüche

1. Hohlwanddose (1) für Elektroinstallationen in einer Hohlwand, wobei die Hohlwanddose (1) einen Dosenkörper (2) aufweist, der einen über eine Installationsöffnung (3) zugänglichen Installationsraum (4) bildet, wobei die Hohlwanddose (1) eine Verankerungseinrichtung (5) mit wenigstens einem verstellbaren Verankerungselement (5b) aufweist, um die Hohlwanddose (1) im eingesetzten Zustand in der Hohlwand zu verankern, wobei die Verankerungseinrichtung (5) zwischen einer Einsetzstellung, in welcher die Hohlwanddose (1) zum Einsetzen in die Hohlwand eine minimierte Einsetzkontur aufweist, und einer Verankerungsstellung, in welcher das wenigstens eine Verankerungselement (5b) über die Einsetzkontur der Hohlwanddose (1) vorsteht, überführbar ist.

2. Hohlwanddose (1) nach dem vorangehenden Anspruch, **dadurch gekennzeichnet, dass** die Hohlwanddose (1) wenigstens ein Betätigungselement (5a) aufweist, um die Verankerungseinrichtung (5), vorzugsweise stufenlos, zwischen der Einsetzstellung und der Verankerungsstellung zu überführen, wobei die Hohlwanddose (1) bevorzugt für jedes Verankerungselement (5b) ein eigenes Betätigungselement (5a) aufweist.

3. Hohlwanddose (1) nach dem vorangehenden Anspruch, **dadurch gekennzeichnet, dass** das Betätigungselement (5a) bewegbar am Dosenkörper (2) gelagert ist, vorzugsweise in einer zur Achse des Dosenkörpers (2) parallelen Richtung bewegbar.

4. Hohlwanddose (1) nach einem der beiden vorangehenden Ansprüche, **dadurch gekennzeichnet, dass** die Hohlwanddose (1), vorzugsweise für jedes Betätigungselement 5a), einen Führungskanal (5d) aufweist, in welchem das Betätigungselement (5a) bewegbar angeordnet ist, wobei das Betätigungselement (5a) bevorzugt in der Ausgangsstellung aus dem Führungskanal (5d) vorsteht und/oder in der Verankerungsstellung vollständig innerhalb des Führungskanals (5d) liegt.

5. Hohlwanddose (1) nach einem der drei vorangehenden Ansprüche, **dadurch gekennzeichnet, dass** das Betätigungselement (5a) das Verankerungselement (5b) zur Überführung von der Ausgangsstellung in die Verankerungsstellung in radialer Richtung nach außen verdrängt, vorzugsweise durch Verschwenken des Verankerungselements (5b) um eine Schwenkachse (5e), bevorzugt um eine radial außerhalb des Betätigungselements (5a) liegende Schwenkachse (5e), besonders bevorzugt derart, dass das Verankerungselement (5b) mit zunehmender Verschwenkung um die Schwenkachse (5e) sich entgegen der Einsetzrichtung (E) zur Ebene (E0) der Installationsöffnung hindreht.

6. Hohlwanddose (1) nach einem der vier vorangehenden Ansprüche, **dadurch gekennzeichnet, dass** das Verankerungselement (5b) mit zunehmender Betätigung des Betätigungselements (5a) zunehmend von einer eingefahrenen Position in der Ausgangsstellung der Verankerungseinrichtung (5) in eine maximal ausgefahrene Position in der Verankerungsstellung der Verankerungseinrichtung (5) überführt wird, wobei vorzugsweise das Betätigungselement (5a) und das Verankerungselement (5b) über einen Keileingriff zusammenwirken.

7. Hohlwanddose (1) nach einem der fünf vorangehenden Ansprüche, **dadurch gekennzeichnet, dass** das Betätigungselement (5a) in der Ausgangsstellung und/oder in der Verankerungsstellung und/oder in wenigstens einer Zwischenstellung der Hohlwanddose (1) kraft- und/oder formschlüssig am Dosenkörper (2) arretiert oder arretierbar ist.

8. Hohlwanddose (1) nach einem der sechs vorangehenden Ansprüche, **dadurch gekennzeichnet, dass** ein Betätigungsabschnitt (5a1) des Betätigungselements (5a) in der Verankerungsstellung in der Ebene (E0) der Installationsöffnung liegt und/oder bündig mit einem die Installationsöffnung (3) definierenden Rand (2a) des Dosenkörpers (2) ausgerichtet ist.

9. Hohlwanddose (1) nach dem vorangehenden Anspruch, **dadurch gekennzeichnet, dass** das Verankerungselement (5b) fest mit dem Dosenkörper (2) verbunden ist, vorzugsweise kraft- und/oder formschlüssig, wobei das Verankerungselement (5b) bevorzugt einstückig am Dosenkörper (2) angeformt ist.

10. Hohlwanddose (1) nach einem der vorangehenden Ansprüche, **dadurch gekennzeichnet, dass** das Verankerungselement (5b) zur Überführung der Verankerungseinrichtung (5) zwischen der Ausgangsstellung und der Verankerungsstellung verformbar ist, vorzugsweise elastisch oder plastisch, bevorzugt gelenkig, insbesondere über ein Festkörpergelenk (5e), wobei eine Gelenkachse des Festkörpergelenks (5e) besonders bevorzugt tangential zum Dosenkörper (2) ausgerichtet ist.

11. Hohlwanddose (1) nach einem der vorangehenden Ansprüche, **dadurch gekennzeichnet, dass** das Verankerungselement (5b) streifenförmig ausgebildet ist und/oder in Einsetzrichtung (E) der Hohlwanddose (1) vorsteht.

12. Hohlwanddose (1) nach einem der vorangehenden Ansprüche, **dadurch gekennzeichnet, dass** das Verankerungselement (5b) in der Ausgangsstellung im Wesentlichen bündig mit einer Wand, vorzugsweise einer Außenwand, des Dosenkörpers (2) verläuft.

13. Hohlwanddose (1) nach einem der vorangehenden Ansprüche, **dadurch gekennzeichnet, dass** der Dosenkörper (2) zumindest abschnittsweise doppelwandig ausgebildet ist, wobei eine Innenwand des Dosenkörpers (2) den Installationsraum (4) bildet, wobei eine Außenwand des Dosenkörpers (2) die Außenkontur der Hohlwanddose (1) bildet, wobei das Betätigungselement (5a) vorzugsweise zumindest abschnittsweise oder vollständig zwischen der Innenwand und der Außenwand des Dosenkörpers (2) angeordnet ist, wobei das Betätigungselement (5a) bevorzugt nicht in radialer Richtung über die Außenwand des Dosenkörpers (2) vorsteht.

14. Hohlwanddose (1) nach einem der vorangehenden Ansprüche, **dadurch gekennzeichnet, dass** die Verankerungseinrichtung (5) eine Mehrzahl von Verankerungselementen (5b) aufweist, die, vorzugsweise einzeln, zwischen der Ausgangsstellung und der Verankerungsstellung überführbar sind.

15. Hohlwanddose (1) nach dem vorangehenden Anspruch, **dadurch gekennzeichnet, dass** die Verankerungselemente (5b) symmetrisch am Dosenkörper (2) angeordnet sind, vorzugsweise auf diametral gegenüberliegenden Seiten des Dosenkörpers (2), bevorzugt um 90° drehversetzt zu wenigstens einem Trennwandabschnitt (2d), der zur Verbindung der Installationsöffnungen (3) und/oder Installationsräume (4) gekoppelter Hohlwanddosen (1) aus dem Dosenkörper (2) heraustrennbar ist.
